# EUROPEAN PATENT APPLICATION

(11) **EP 4 056 965 A1**
(43) Date of publication of application: **14.09.2022**
(21) Application number: 22157824.8
(22) Date of filing: 21.02.2022
(51) Int. Cl.: G01J 3/02, G01S 7/481, G01S 17/89

(54) **OPTICAL SENSING SYSTEM**

(30) Priority: 10.03.2021 CN 202110260184
(71) Applicant: Coretronic Corporation, Hsin-Chu 300 (TW)
(72) Inventor: LIN, Yao-Shun, Hsin-Chu 300 (TW); PAN, Haw-Woei, Hsin-Chu 300 (TW); CHUANG, Fu-Ming, Hsin-Chu 300 (TW)
(74) Representative: Ter Meer Steinmeister & Partner

(57) **Abstract**

An optical sensing system, including a light source, a projection module, and a sensing module, is provided. The light source is configured to provide an illumination beam transmitted to a target object by the projection module. The projection module is disposed on a transmission path of the illumination beam. The target object reflects the illumination beam to generate a sensing beam. The sensing module is disposed on a transmission path of the sensing beam and includes at least one sensing unit. The sensing unit includes a light receiving element and a sensing element, and has an optical axis. The light receiving element is located between the target object and the sensing element, and is configured to guide the sensing beam to the sensing element along the optical axis. The light receiving element has a focal point on the optical axis. The sensing element is not located at the focal point.

## Description

This application claims priority of CN appl. serial no. 202110260184.5, filed on March 10, 2021.

### BACKGROUND

### Technical Field

The disclosure relates to an electronic device, and more particularly to an optical sensing system.

### Description of Related Art

Light (Laser) detection and ranging (LiDAR) is an optical remote sensing technology that uses light to measure the distance to a target. LiDAR can measure the distance, recognize the appearance of objects, and establish the three-dimensional geographical information model of the surrounding with high precision. LiDAR has advantages such as long measurement distance, high precision, and high recognition, is not affected by the brightness of the environment, and may sense information such as the shape and the distance of surrounding obstacles day and night. The scanning range of LiDAR is 100 to 200 meters, so LiDAR can meet the requirements of farther and more accurate sensing for autonomous cars.

In optical sensing, if more signal light energy can be received, the measurement distance can be longer, the signal-to-noise ratio can be increased, the ability to resist stray light (such as sunlight or ambient light) can be improved, and misjudgment is less likely. It can be known from the empirical formula of the signal light energy receivable by the light sensor that the signal light energy receivable by the light sensor is proportional to the light receiving area. When there is no light receiving element, the light receiving area is equal to the area of the light sensor, and the light receiving efficiency is 1. If there is a light receiving element, the light receiving area is equal to the area of the light receiving element, and the light receiving efficiency needs to be calculated. However, such method causes a part of the light to be totally reflected within the light receiving element and not be able to be emitted when the light is incident at a large angle (above 50°), thereby resulting in loss, and a part of the light is deflected and cannot be received by the light sensor. Therefore, there is not only no gain, but also more loss.

The information disclosed in this Background section is only for enhancement of understanding of the background of the described technology and therefore it may contain information that does not form the prior art that is already known to a person of ordinary skill in the art. Further, the information disclosed in the Background section does not mean that one or more problems to be resolved by one or more embodiments of the invention was acknowledged by a person of ordinary skill in the art.

### SUMMARY

It is an object to provide an optical sensing system, which can increase the number of optical signals received to improve the optical sensing effect.

Other objectives and advantages of the disclosure may be further understood from the technical features disclosed in the disclosure.

The object is solved by the features of the independent claims. Preferred embodiments are given in the dependent claims.

In order to achieve one, a part, or all of the above objectives or other objectives, the disclosure provides an optical sensing system, which includes a light source, a projection module, and a sensing module. The light source is configured to provide an illumination beam. The projection module is disposed on a transmission path of the illumination beam. The illumination beam is transmitted to a target object by the projection module. The target object reflects the illumination beam to generate a sensing beam. The sensing module is disposed on a transmission path of the sensing beam. The sensing module includes at least one sensing unit.

Each sensing unit may include a light receiving element and a sensing element.

The sensing unit may have an optical axis.

The light receiving element may be located between the target object and the sensing element.

The light receiving element may be configured to guide the sensing beam to the sensing element along the optical axis.

The light receiving element may have a focal point on the optical axis, and the sensing element may be not located at the focal point.

In one or more embodiments, a number of the at least one sensing unit may be multiple.

In one or more embodiments, directions of the plurality of optical axes of the plurality of sensing units may be different from each other.

In one or more embodiments, angles of included angles between the plurality of optical axes of the adjacent sensing units may be the same.

In one or more embodiments, at least two of a plurality of sensing surfaces of the plurality of sensing elements respectively may have included angles of greater than 90 degrees with a central axis of the sensing module.

In one or more embodiments, the optical axis may be perpendicular to the sensing surface.

In one or more embodiments, at least two of a plurality of sensing surfaces of the plurality of sensing elements respectively may have included angles of less than 90 degrees with a central axis of the sensing module, and the optical axis may be perpendicular to the sensing surface.

In one or more embodiments, the sensing element may be located between the light receiving element and the focal point.

In one or more embodiments, the focal point may be located between the light receiving element and the sensing element.

In one or more embodiments, the at least one sensing unit may further comprise a light shielding member disposed around the light receiving element.

In one or more embodiments, the light receiving element may be located between the light shielding member and the sensing element.

In one or more embodiments, the at least one sensing unit may further comprise a reflecting member disposed between the light receiving element and the sensing element.

In one or more embodiments, a light receiving area of the light receiving element may be greater than an area of a sensing surface of the sensing element.

In one or more embodiments, the light receiving element may comprise a lens.

Based on the above, in the optical sensing system of the disclosure, the sensing module includes the light source, the projection module, and the sensing module. The sensing module is disposed on the transmission path of the sensing beam, and the sensing module includes at least one sensing unit. Each sensing unit includes the light receiving element and the sensing element. The light receiving element has the focal point on the optical axis, and the sensing element is not located at the focal point of the light receiving element. In this way, the sensing beam transmitted to an edge of the light receiving element may be prevented from being transmitted outside the sensing element, which results in optical signal loss. Therefore, the design of the disclosure can increase the number of optical signals received to improve the optical sensing effect.

Other objectives, features and advantages of the disclosure will be further understood from the further technological features disclosed by the embodiments of the disclosure wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of an optical sensing system of an embodiment of the disclosure.
FIG. 2 is a schematic diagram of a sensing module of FIG. 1.
FIG. 3 is a schematic diagram of a sensing module according to an embodiment of the disclosure.
FIG. 4 is a schematic diagram of a sensing module of another embodiment of the disclosure.
FIG. 5 is a schematic diagram of a sensing module of another embodiment of the disclosure.
FIG. 6 is a schematic diagram of a sensing module of another embodiment of the disclosure.
FIG. 7 is a schematic diagram of a sensing module of another embodiment of the disclosure.

### DETAILED DESCRIPTION OF DISCLOSED EMBODIMENTS

In the following detailed description of the preferred embodiments, reference is made to the accompanying drawings which form a part hereof, and in which are shown by way of illustration specific embodiments in which the invention may be practiced. In this regard, directional terminology, such as "top," "bottom," "front," "back," etc., is used with reference to the orientation of the Figure(s) being described. The components of the disclosure can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the disclosure. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless limited otherwise, the terms "connected," "coupled," and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

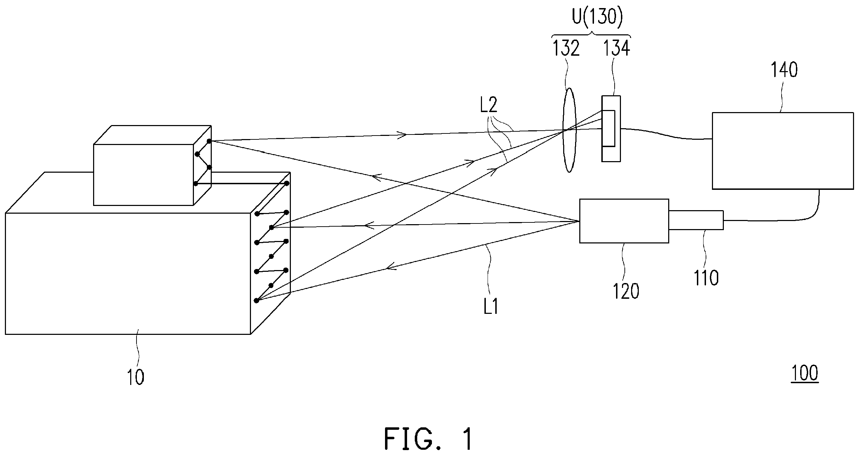

FIG. 1 is a schematic diagram of an optical sensing system according to an embodiment of the disclosure. Please refer to FIG. 1. This embodiment provides an optical sensing system 100 for sensing a target object 10, such as any object having a physical shape. The optical sensing system 100 includes a light source 110, a projection module 120, and a sensing module 130. The light source 110 is configured to provide an illumination beam L1. The projection module 120 is disposed on a transmission path of the illumination beam L1. In this embodiment, the light source 110, the projection module 120, and the sensing module 130 in the optical sensing system 100 are disposed in a non-coaxial manner. The illumination beam L1 is transmitted to the target object 10 by the projection module 120. The target object 10 reflects the illumination beam L1 to generate a sensing beam L2. In this embodiment, the light source 110 is, for example, a semiconductor laser using infrared light, but the disclosure is not limited thereto.

In this embodiment, the projection module 120 is, for example, a combination of any number of optical elements (such as lenses), F-theta lenses, or microelectromechanical systems (MEMS), but the disclosure is not limited thereto. That is, in this embodiment, the illumination beam L1 provided by the light source 110 may be projected in a scanning manner by the MEMS with the F-theta lens in the projection module 120.

In this embodiment, the optical sensing system 100 further includes a processor 140, which is electrically connected to the light source 110 and the sensing module 130, and is configured to control the light source 110 to read data from the sensing module 130 and/or further control according to the data. The processor 140 is, for example, a central processing unit (CPU), other programmable general-purpose or specific-purpose microprocessors, digital signal processors (DSPs), programmable controllers, application specific integrated circuits (ASICs), other similar elements, or a combination of the elements, but the disclosure is not limited thereto. For example, in this embodiment, the processor 140 may turn on/off the light source 110 instantly or at any time, or adjust the power of the light source 110 according to an optical signal received by the sensing module 130, but the disclosure is not limited thereto.

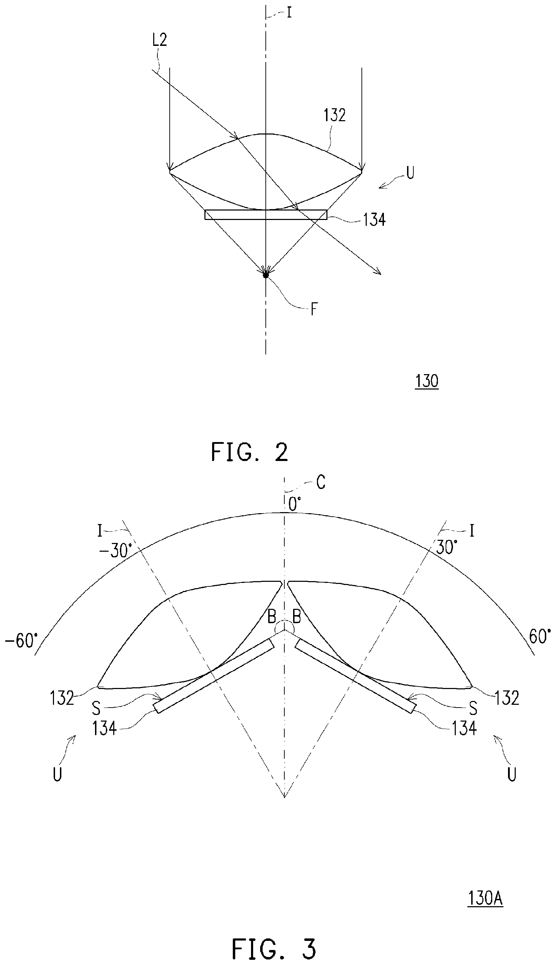

FIG. 2 is a schematic diagram of a sensing module of FIG. 1. Please refer to FIG. 1 and FIG. 2 at the same time. The sensing module 130 is disposed on a transmission path of the sensing beam L2 and is configured to receive the sensing beam L2 for signal recognition. The sensing module 130 includes at least one sensing unit U. In this embodiment, the number of the sensing unit U is, for example, one. In other words, the sensing module 130 of this embodiment is composed of a single sensing unit U. However, in other embodiments, the number of the sensing unit U may be multiple. Each sensing unit U includes a light receiving element 132 and a sensing element 134, and the sensing unit U has an optical axis I. The light receiving element 132 is configured to guide the sensing beam L2 to the sensing element 134 along the optical axis I and is configured to increase the light receiving area. In this embodiment, the light receiving element 132 includes a lens, such as a lens with a positive refractive power, but the disclosure is not limited thereto. Therefore, the light receiving element 132 has a focal point F on the optical axis I.

The sensing element 134 of the sensing unit U is located on the transmission path of the sensing beam L2, and the light receiving element 132 is located between the target object 10 and the sensing element 134. The sensing element 134 is, for example, a photodiode (PD) or an avalanche photodiode (APD), but the disclosure is not limited thereto. In this embodiment, the light receiving area of the light receiving element 132 is greater than the area of the sensing surface of the sensing element 134, as shown in FIG. 2. It is worth mentioning that the sensing element 134 is not located at the focal point F of the light receiving element 132. For example, in this embodiment, the sensing element 134 is located between the light receiving element 132 and the focal point F thereof. Therefore, when the sensing beam L2 is transmitted through the light receiving element 132, the sensing beam L2 is refracted and condensed by passing through the light receiving element 132, and may continue to be transmitted to the sensing element 134. In this way, the sensing beam L2 transmitted to an edge of the light receiving element 132 (that is, light that cannot be focused at the focal point F after passing through the light receiving element 132) may be prevented from being transmitted to outside the sensing element 134, which results in optical signal loss. In other words, the design of this embodiment can increase the number of optical signals received to improve the optical sensing effect.

FIG. 3 is a schematic diagram of a sensing module according to an embodiment of the disclosure. Please refer to FIG. 3. A sensing module 130A of this embodiment is similar to the sensing module 130 shown in FIG. 2. The difference between the two is that, in this embodiment, the number of the sensing unit U is multiple, and the directions of the optical axes I of the sensing units U are different from each other. Specifically, the number of the sensing unit U of this embodiment is two. Sensing surfaces S of the sensing elements 134 in the two sensing units U respectively have included angles B of greater than 90 degrees with a central axis C of the sensing module 130A, and the respective optical axes I of the two sensing units U are perpendicular to the corresponding sensing surfaces S. In other words, the sensing surfaces S of the sensing elements 134 of this embodiment are back-facing and inclined to the central axis C. Therefore, when the light receiving angle of a single sensing unit U is 60 degrees, the light receiving angle of the sensing module 130A of this embodiment may reach 120 degrees. That is, the two sensing units U respectively receive incident light from -60 degrees to 0 degrees and incident light from 0 degrees to 60 degrees, as shown in FIG. 3. In this embodiment, the comprehensive optical efficiency (which may be defined by the ratio of the product of the light receiving area and the light receiving efficiency to the sensing area) of the sensing beam L2 with an incident angle of ±50 degrees may reach 128% compared with the traditional manner.

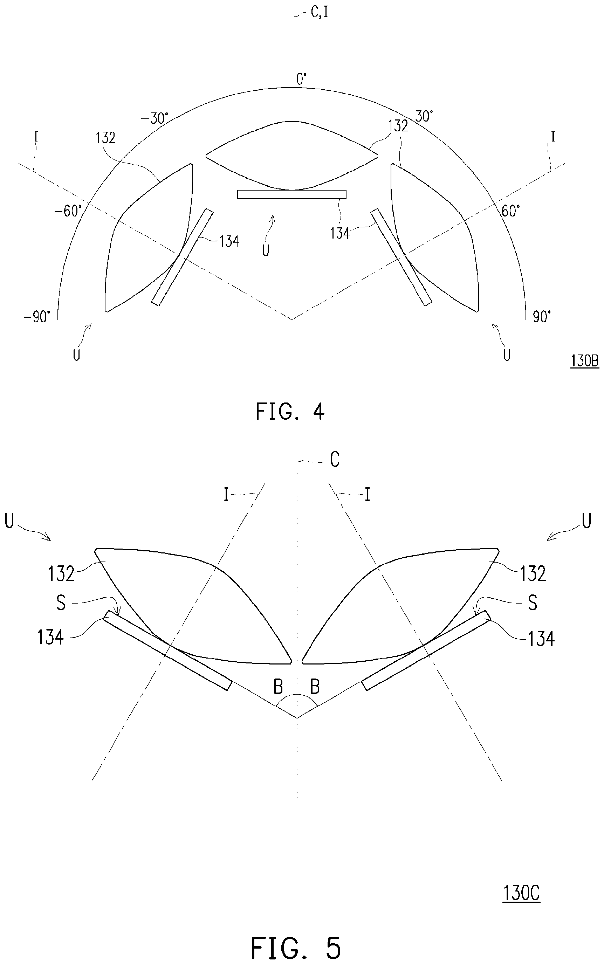

FIG. 4 is a schematic diagram of a sensing module according to another embodiment of the disclosure. Please refer to FIG. 4. A sensing module 130B of this embodiment is similar to the sensing module 130 shown in FIG. 2. The difference between the two is that, in this embodiment, the number of the sensing unit U is increased to three, the respective optical axes I of the three sensing units U are perpendicular to the corresponding sensing surfaces S, and the angles sandwiched between the optical axes I of the adjacent sensing units U are the same. Therefore, when the light receiving angle of a single sensing unit U is 60 degrees, the light receiving angle of the sensing module 130B of this embodiment may reach 180 degrees. That is, the three sensing units U respectively receive incident light from -90 degrees to -30 degrees, incident light from -30 degrees to 30 degrees, and incident light from 30 degrees to 90 degrees, as shown in FIG. 4.

FIG. 5 is a schematic diagram of a sensing module according to another embodiment of the disclosure. Please refer to FIG. 5. A sensing module 130C of this embodiment is similar to the sensing module 130A shown in FIG. 3. The difference between the two is that, in this embodiment, the sensing surfaces S of the sensing elements 134 in the two sensing units U respectively have included angles B of less than 90 degrees with the central axis C of the sensing module 130C. In other words, the sensing surfaces S of the sensing elements 134 of this embodiment are facing and inclined to the central axis C. Therefore, when the light receiving angle of a single sensing unit U is 60 degrees, the light receiving angle of the sensing module 130C of this embodiment may reach 120 degrees. At the same time, the configuration of this embodiment is applicable to the sensing module 130C with different volumes.

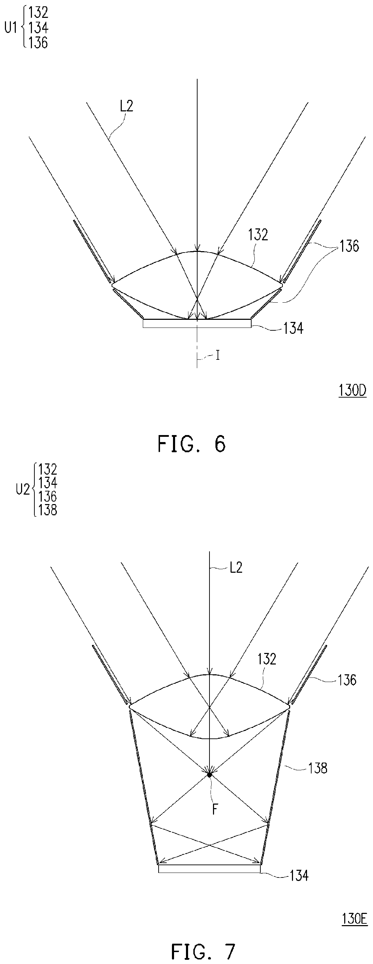

FIG. 6 is a schematic diagram of a sensing module according to another embodiment of the disclosure. Please refer to FIG. 6. A sensing module 130D of this embodiment is similar to the sensing module 130 shown in FIG. 2. The difference between the two is that, in this embodiment, a sensing unit U1 further includes a light shielding member 136 disposed around the light receiving element 132, and the light receiving element 132 is located between the light shielding member 136 and the sensing element 134. That is, the light shielding member 136 may be disposed on a light incident side of the light receiving element 132. In detail, the light shielding member 136 is disposed at a junction where the light receiving element 132 may receive the maximum incident angle to block the transmission of external noise light into the light receiving element 132. In this way, the sensing effect can be improved. In this embodiment, the light incident side and a light emitting side of the light receiving element 132 are both disposed with the light shielding member 136. However, in other embodiments, the light shielding member 136 may be only disposed on the light incident side of the light receiving element 132, but the disclosure is not limited thereto.

FIG. 7 is a schematic diagram of a sensing module according to another embodiment of the disclosure. Please refer to FIG. 7. A sensing module 130E of this embodiment is similar to the sensing module 130D shown in FIG. 6. The difference between the two is that, in this embodiment, the light shielding member 136 is only disposed on the light incident side of the light receiving element 132, and a sensing unit U2 further includes a reflecting member 138 disposed between the light receiving element 132 and the sensing element 134. In detail, the reflecting member 138 is, for example, a circular reflecting cylinder or reflecting ring with a reflective material on the inner wall, as shown in FIG. 7. In detail, the reflecting member 138 is disposed around a light transmission path between the light emitting side of the light receiving element 132 and the sensing element 134 to reflect the sensing beam L2 transmitted inside until the sensing beam L2 is transmitted to the sensing element 134. In this way, the sensing strength can be improved. In addition, the focal point F of the light receiving element 132 is located between the light receiving element 132 and the sensing element 134. That is, the sensing element 134 is disposed behind the focal point F of the light receiving element 132, so that the sensing beam L2 passing through the light receiving element 132 and transmitted into the reflecting member 138 achieves a uniform incidence effect by defocusing. In this way, the sensing effect can be improved.

In summary, in the optical sensing system of the disclosure, the sensing module includes the light source, the projection module, and the sensing module. The sensing module is disposed on the transmission path of the sensing beam, and the sensing module includes at least one sensing unit. Each sensing unit includes the light receiving element and the sensing element. The light receiving element has the focal point on the optical axis, and the sensing element is not located at the focal point of the light receiving element. In this way, the sensing beam transmitted to the edge of the light receiving element may be prevented from being transmitted outside the sensing element, which results in optical signal loss. Therefore, the design of the disclosure can increase the number of optical signals received to improve the optical sensing effect.

The foregoing description of the preferred embodiments of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the disclosure" or the like does not necessarily limit the claim scope to a specific embodiment, and the reference to particularly preferred exemplary embodiments of the invention does not imply a limitation on the invention, and no such limitation is to be inferred. The invention is limited only by the scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be configured to interpret or limit the scope or meaning of the claims. Any advantages and benefits described may not apply to all embodiments of the invention. It should be appreciated that variations may be made in the embodiments described by persons skilled in the art without departing from the scope of the disclosure as defined by the following claims. Moreover, no element and component in the present disclosure is intended to be dedicated to the public regardless of whether the element or component is explicitly recited in the following claims.

## Claims

1. An optical sensing system (100), configured to sense a target object (10), comprises a light source (110), a projection module (120), and a sensing module (130), wherein:
the light source (110) is configured to provide an illumination beam (L1);
the projection module (120) is disposed on a transmission path of the illumination beam (L1), the illumination beam (L1) is transmitted to the target object (10) by the projection module (120), and the target object (10) reflects the illumination beam (L1) to generate a sensing beam (L2); and
the sensing module (130) is disposed on a transmission path of the sensing beam (L2), the sensing module (130) comprises at least one sensing unit (U), each of the at least one sensing unit (U) has an optical axis (I).

2. The optical sensing system according to claim 1, wherein each of the at least one sensing unit (U) comprises a light receiving element (132) and a sensing element (134).

3. The optical sensing system according to claim 2, wherein the light receiving element (132) is located between the target object (10) and the sensing element (134), and is configured to guide the sensing beam (L2) to the sensing element (134) along the optical axis (I), wherein the light receiving element (132) has a focal point (F) on the optical axis (I), and the sensing element (134) is not located at the focal point (F).

4. The optical sensing system according to any one of the preceding claims, wherein a number of the at least one sensing unit (U) is multiple.

5. The optical sensing system according to claim 4, wherein directions of the plurality of optical axes (I) of the plurality of sensing units (U) are different from each other.

6. The optical sensing system according to claim 4 or 5, wherein angles of included angles between the plurality of optical axes (I) of the adjacent sensing units (U) are the same.

7. The optical sensing system according to any one of the preceding claims 4-6, wherein at least two of a plurality of sensing surfaces (S) of the plurality of sensing elements (134) respectively have included angles of greater than 90 degrees with a central axis (C) of the sensing module (130), and the optical axis (I) is perpendicular to the sensing surface (S) or at least two of a plurality of sensing surfaces (S) of the plurality of sensing elements (134) respectively have included angles of less than 90 degrees with a central axis (C) of the sensing module (130), and the optical axis (I) is perpendicular to the sensing surface (S).

8. The optical sensing system according to any one of the preceding claims, wherein the sensing element (134) is located between the light receiving element (132) and the focal point (F).

9. The optical sensing system according to any one of the preceding claims 1-7, wherein the focal point (F) is located between the light receiving element (132) and the sensing element (134).

10. The optical sensing system according to any one of the preceding claims, wherein the at least one sensing unit (U) further comprises a light shielding member (136) disposed around the light receiving element (132).

11. The optical sensing system according to claim 10, wherein the light receiving element (132) is located between the light shielding member (136) and the sensing element (132).

12. The optical sensing system according to any one of the preceding claims, wherein the at least one sensing unit (U) further comprises a reflecting member (138) disposed between the light receiving element (132) and the sensing element (134).

13. The optical sensing system according to any one of the preceding claims, wherein a light receiving area of the light receiving element (132) is greater than an area of a sensing surface (S) of the sensing element (134).

14. The optical sensing system according to any one of the preceding claims, wherein the light receiving element (132) comprises a lens.
